# EUROPEAN PATENT SPECIFICATION

(11) **EP 4 016 236 B1**
(45) Date of publication and mention of the grant of the patent: **12.07.2023**
(21) Application number: 20215547.9
(22) Date of filing: 18.12.2020
(51) Int. Cl.: G05D 23/19, F24D 19/10

(54) **METHOD AND SYSTEM FOR KEEPING FLUID FLOW CONSTANT IN A RADIATOR**
VERFAHREN UND SYSTEM ZUR KONSTANTHALTUNG DES FLÜSSIGKEITSSTROMS IN EINEM HEIZKÖRPER
PROCÉDÉ ET SYSTÈME POUR MAINTENIR LE DÉBIT DE FLUIDE CONSTANT DANS UN RADIATEUR

(43) Date of publication of application: 22.06.2022
(73) Proprietor: Danfoss A/S, 6430 Nordborg (DK)
(72) Inventor: Gammeljord, Peter, 6430 Nordborg (DK); Hesseldahl, Søren, 6430 Nordborg (DK)
(74) Representative: Patentanwälte Olbricht Buchhold Keulertz

(56) References cited:
- EP-A1- 3 418 849
- EP-A1- 3 588 235

## Description

The present invention pertains to a method for keeping fluid flow constant in a radiator, said radiator comprising an inlet and an outlet conduit for fluidly connecting the radiator with a fluid source and an electronic thermostat for controlling the fluid flow in the radiator. The invention also pertains to a system for keeping fluid flow constant in a radiator by means of a corresponding method, said system comprising an electronic thermostat and a temperature sensor, wherein the electronic thermostat and the temperature sensor are wirelessly connected to each other.

It is known from the art to provide radiators with electronic thermostats for automatically regulating the temperature of the radiator. The electronic thermostat may comprise a step motor and a controller, which in combination with a valve operated by the step motor vary the heating fluid flow through the radiator. The controller may be set such that a desired temperature or temperature range of the radiator and therefore of the room heated by the radiator is obtained. Usually, a plurality of radiators is used as part of a central heating system within a given edifice and in different rooms.

A person may change the settings of the electronic thermostat in order to change the temperature in a given room or part of a building. The person may only want to change the temperature of a single or only a limited number of radiators of a central heating system. However, by changing the flow through only a limited number of radiators, the flow in the whole central heating system and not only in the associated radiator is affected. For example, if a person decreases the flow through one radiator of a central heating system, the differential pressure and therefore the flow through the remaining radiators may automatically be increased. This means that all radiators of the central heating system may be affected by the adjustment of a single radiator of said system.

According to the state of the art, the problem with the undesired change in differential pressure is solved by additional features like a dynamic valve combined or flow measuring means. Although these solutions offers fast regulation of the corresponding radiators, it also comes at considerable costs.

Another known method for compensating undesired changes in differential pressure across radiators is simply waiting until the room temperature sensor of the electronic thermostat registers a higher room temperature. Once the room temperature sensor of the electronic thermostat registers a higher room temperature, the valve of the electronic thermostat may be shut or partially shut accordingly. However, this can take 30 minutes or more depending on the size of the room. This method therefore represents very slow regulation with increased energy consumption and corresponding higher fuels costs.

The aim of the present invention is to overcome the above-mentioned problems by providing an improved method and an improved system for keeping fluid flow constant in a radiator. This aim is achieved by a method according to claim 1 and a system according to claim 8. Preferable embodiments of the invention are subject to the dependent claims.

The invention provides a method for keeping fluid flow constant in a radiator, said radiator comprising an inlet and an outlet conduit for fluidly connecting the radiator with a fluid source. The fluid source may be a boiler or a central heating system and may not be affected by the method directly. The radiator or radiators on which the method is carried out comprises and an electronic thermostat for controlling the fluid flow in the radiator. The method comprises the steps of
- measuring the temperature of the fluid at the inlet and/or at the outlet conduit and/or at the radiator at time intervals using a sensor;
- calculating the difference between the measured temperatures;
- verifying whether a daily schedule of the electronic thermostat has been changed and verifying whether the setpoint of the electronic thermostat has been changed by a user; and
- if the daily schedule of the electronic thermostat has not been changed and the setpoint of the electronic thermostat has not been changed and the difference between the measured temperatures exceeds a threshold such that the temperature of the fluid approaches its temperature prior to the threshold exceedance, then varying the fluid flow in the radiator by means of the electronic thermostat (eTRF), and,
if the daily schedule of the electronic thermostat (eTRV) has been changed or the setpoint of the electronic setpoint has been changed, then not counteracting this change and the corresponding change of flow through the radiator.

The expression at the inlet and/or at the outlet conduit may be understood broadly and may refer to any position at the conduits or between the conduits. The temperature may also be measured at some position on the radiator itself.

The sensor could usually be place on the back side of the radiator. Alternatively, the sensor may be positioned on the front side of the radiator. A preferred position for placing the temperature sensor may be at the radiator and near the outlet or the inlet of the radiator. A heat cost allocator may be provided at the radiator, which is usually placed at the middle of the radiator. The heat cost allocator may include a temperature sensor, which could be used for the presently described measurements and within the context of the present invention. The presently used sensor may therefore be a part of a separate device. Alternatively or additionally, the present invention's sensor might be placed at the same or close to the typical position, at which a heat cost allocator is placed. The sensor could also be placed at any place between the middle of the radiator and the outlet or the inlet of the radiator. For example, it could be placed at 1/3 the distance from the inlet or the outlet to the middle of the radiator. Alternatively, it could be placed at 1/3 to 2/3 of the distance from the inlet to the outlet of the radiator. In principle, he sensor can be placed anywhere on or close to the radiator as long as some heat exchange from the fluid to the radiator occurs and can be measured, meaning that the temperature of the fluid decreases measurably as a result because of this heat exchange.

The daily schedule of the electronic thermostat may represent some program or data set provided with the thermostat. The daily schedule may define the desired temperatures or temperature ranges of the radiator for given times of a day and/or days of a week, which are controlled by the electronic thermostat.

The verification whether a daily schedule of the electronic thermostat has been changed and the setpoint of the electronic thermostat has been changed by a user may refer to a given time period prior to the measurements of temperature. For example, it may be verified if the daily schedule of the electronic thermostat has been changed and the setpoint of the electronic thermostat has been changed by a user within 1, 5 or 10 minutes prior to a given measurement of temperature of the fluid. Both of these conditions have to be verified in order to establish whether the detected pressure change at the given radiator is the result of an intentional control input by a user or by some programming for that radiator.

If the daily schedule of the electronic thermostat has been changed or the setpoint of the electronic thermostat has been changed by a user, then this change and the corresponding change of flow though the radiator is clearly desired and will not be counteracted by the method.

If the return temperature of the fluid raises without a change of the daily schedule of the electronic thermostat and without a user interference in which the user has e.g. set a different and in particular higher setpoint, then a controller e.g. in the electronic thermostat can conclude that this is due to a raise in the differential pressure and can compensate for that by closing the valve of the electronic thermostat by an amount, thereby keeping the flow through the radiator constant or near constant.

The present invention offers an easy way to compensate sudden drops or increases in the differential pressure across a radiator without the use of any pressure measuring device, a delta p regulator, or any additional pressure compensator. According to the invention, only the temperature of the fluid of the radiator, and in particular the return temperature of the fluid is measured over time and an occurring temperature difference may be interpreted as indicative of an undesired pressure drop or increase. Said pressure drop or increase is then balanced out according to the invention. The flow through the radiator may therefore be kept constant or near constant in circumstances where it actually is supposed to be constant. In effect, the invention performs a sort of hydraulic balancing across the radiator.

In a preferred embodiment of the invention, verifying whether the daily schedule of the electronic thermostat has been changed and verifying whether the setpoint of the electronic thermostat has been changed by a user is performed if the calculated difference between the measured temperatures exceeds a threshold. Only performing the verification if the calculated difference between the measured temperatures exceeds a threshold reduces the amount of computational steps for performing the method, thereby simplifying its execution and reducing energy consumption of the corresponding devices.

In another preferred embodiment of the invention, the measuring time intervals are constant and/or adjustable. They may be in the range of 10 seconds to 2 minutes, in particular 1 minute ±20 seconds. The measurements can be performed continuously by the corresponding sensor and the measured values may be transmitted to the electronic thermostat for further computation by the thermostat's controller.

In another preferred embodiment of the invention, two consecutively measured temperatures or more than two measured temperatures are compared to each other. It is also possible to measure and compare non-consecutively measured temperatures to each other. Therefore, it is possible to balance situations, in which only minor temperature changes occur between one measurement and a subsequent measurement, said minor temperature changes being smaller than the threshold value. In this situation, the temperature of the fluid measured at two subsequent measurements may keep raising or drooping continuously by smaller increments than defined by the threshold, yet overall and over multiple temperature measurements, the temperature may still change by a significant amount. In this situation, the invention may still compensate the gradual pressure change by closing or opening the valve of the electronic thermostat accordingly.

In another preferred embodiment of the invention, the temperature is measured only at the outlet or the inlet conduit. By measuring the temperatures and therefore the temperature differences at the outlet conduit of the radiator as opposed to measuring them at the inlet conduit it can be ensured, that higher temperature differences can be measured, thereby increasing the sensitivity of the method. Alternatively or additionally, temperatures might be measured at the inlet conduit. Temperature differences measured ant the inlet might be smaller than at the outlet or return conduit and therefore render the method less sensitive.

However, the invention may be carried out independently of where the temperature is measured. This is particularly useful as the sensor for measuring the temperature and the electronic thermostat may have been installed without the installer actually knowing the flow direction in the radiator or heat exchanger.

Instead of placing the electronic thermostat at the inlet, it may be placed at the outlet by the installer. In this case, the sensor may be placed at the inlet by the installer. The electronic thermostat or rather its controller will realize that the installation has been carried out erroneously when higher temperatures are measured at the outlet than at the inlet. The controller can easily compensate for this mistake without the need for changing the positions of the electronic thermostat and the sensor.

In another preferred embodiment of the invention, the temperature is measured using an infrared temperature sensor attached to the outside of the inlet and/or outlet conduit. Using an infrared temperature sensor makes it possible to minimize the installation effort of the sensor. The sensor may simply be attached to the outside of the corresponding conduit without the need for any substantial changes to the piping of the central heating system. Additionally, infrared temperature sensors are relatively cheap, further facilitating the use of the present invention.

In another preferred embodiment of the invention, the sensor is wirelessly connected to the electronic thermostat. The wireless connection of the two components further simplifies their installation as no additional hardware components need to be provided for connecting the components.

The invention is also directed at a system for keeping fluid flow constant in a radiator by means of a method according to any of claims 1 to 7. The system comprises an electronic thermostat and a temperature sensor, wherein the electronic thermostat and the temperature sensor are wirelessly connected to each other. The system may preferably comprise any further features defined above with respect to the inventive method.

Further features, details and advantages of the invention can be derived from the claim set, the figures and the following description of the figure.

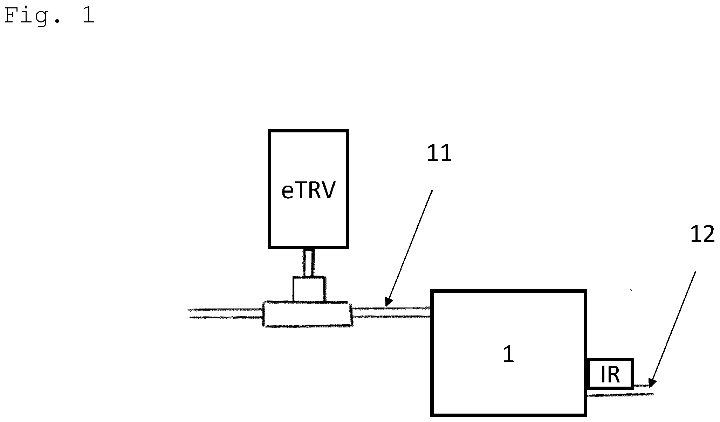

Figure 1 shows a schematic view of the inventive system for carrying out the presently described method.

According to the figure, a radiator 1 equipped with the presently described system comprises an inlet conduit 11 and an outlet conduit 12 for fluidly connecting the radiator 1 with a fluid source. The fluid source is not shown in the figure. The system comprises an electronic thermostat eTRV for controlling the fluid flow in the radiator 1.

For keeping fluid flow constant in the radiator 1, the method according to the invention comprises the steps of
- measuring the temperature of the fluid at the inlet conduit 11 and/or at the outlet conduit 12 and/or at the radiator 1 at time intervals using a sensor;
- calculating the difference between the measured temperatures;
- verifying whether a daily schedule of the electronic thermostat (eTRV) has been changed and verifying whether the setpoint of the electronic thermostat (eTRV) has been changed by a user; and
- if the daily schedule of the electronic thermostat (eTRV) has not been changed, the setpoint of the electronic thermostat (eTRV) has not been changed and the difference between the measured temperatures exceeds a threshold, varying the fluid flow in the radiator 1 by means of the electronic thermostat (eTRV) such that the temperature of the fluid approaches and/or reaches its temperature prior to the threshold exceedance, and, if the daily schedule of the electronic thermostat (eTRV) has been changed or the setpoint of the electronic setpoint has been changed, then not counteracting this change and the corresponding change of flow through the radiator.

Clearly, the method steps may be repeated continuously and repetitively. The sensor shown in the figure may be an infrared sensor IR. However, it is possible to use other temperatures sensors. The sensor may be connected to the electronic thermostat (eTRV) via Bluetooth, WLAN or any other suitable connection, in particular wireless connection.

During operation of the radiator 1 and when an equilibrium state is found by the controller, the return temperature of the fluid occurring at the outlet conduit 12 will have a certain constant or near constant value. If the differential pressure over the radiator 1 increase due to e.g. a user changing the setpoint of the electronic thermostat eTRV of another radiator 1, the flow through the radiator 1 will increase, causing the return temperature to increase accordingly.

The controller detects the unexpected increased return temperature, investigates if settings have changed or a user has set a new setpoint i.e. actually wishes a higher temperature of the radiator 1. If this is not the case, the controller starts to close the valve of the electronic thermostat eTRV by a certain amount. This is done by the step motor of the electronic thermostat eTRV changing the position of the valve by taking one or a few steps.

Each time interval e.g. each minute the temperature sensor may send a new value to the controller of the electronic thermostat (eTRV). The controller may continue requesting the step motor to limit or generally, change the flow through the valve until the same or similar return temperature is obtained as before the unexpected change. Although the present example refers to the return temperature, the inlet temperature may be measured additionally or alternatively.

In the present example, an equilibrium state may be reached at a flow rate of e.g. 17 liters/hour through the radiator 1. An unexpected raise of the flow rate may occur to 19 liter/hours because of a corresponding pressure increase. The return temperature will increase because of the increased flow rate and the controller will start to limit the valve. At the end of the regulation a flow rate of again have 17 liters/hours will be reached. An equilibrium state is now reestablished with a higher differential pressure, but with the same flow value as before. Hence, flow regulation is achieved.

The whole regulation achieved by means of the present invention may normally take 5-10 minutes. A user present in the area affected by the regulated radiator 1 will not notice any undesired room temperature changes. Thus, according to the invention, the comfort level is increased for the user.

In known prior art solutions the electronic thermostat eTRV uses the room temperature alone for regulating the flow through the radiator 1. This may take about 30 minutes or more and the user will notice an undesired temperature change.

Verifying whether the daily schedule of the electronic thermostat (eTRV) has been changed and verifying whether the setpoint of the electronic thermostat (eTRV) has been changed by a user may be performed only if the calculated difference between the measured temperatures exceeds a threshold. This avoids constantly carrying out verifications, even in situations in which no adjustment of the valve is required. Thus, the amount of calculations performed by the controller may be reduced, thereby increasing the lifespan of batteries required for powering the electronic thermostat (eTRV).

The measuring time intervals at which temperatures are measured may be constant and/or adjustable and/or in the range of 10 seconds to 2 minutes. In a preferred embodiment of the invention, the time intervals may be 1 minute ± 20 seconds.

Measuring temperatures may occur at two consecutive instances or more than two instances, which may or may not be consecutive instances. Accordingly, temperatures, which have been measured at consecutive instances and/or at instances, which are spaced apart further from each other, may be compared to each other. The comparison of temperatures may comprise the calculation of the differences of said temperatures.

The temperatures may be measured only at the outlet conduit 12 or the inlet conduit 11. Hence, the invention may be carried out with only one single temperature sensor in addition to the temperature sensor present at the electronic thermostat (eTRV).

The temperature sensor may be an infrared temperature sensor (IR) attached to the outside of the inlet 11 and/or outlet conduit 12. In the embodiment shown in the figure, the infrared temperature sensor (IR) is attached to the outlet conduit 12. The sensor may be wirelessly connected to the electronic thermostat (eTRV).

The invention also cover a system for keeping fluid flow constant in a radiator by means of the presently described method. The system may comprise the electronic thermostat (eTRV) and the temperature sensor (IR), wherein the electronic thermostat (eTRV) and the temperature sensor (IR) are wirelessly connected to each other.

Clearly, the system may and ought to be used with a plurality of radiators 1, all or some of which may be equipped with the above-mentioned components, i.e. an electronic thermostat (eTRV) and a sensor connected to it. Accordingly, the system may comprise a plurality of pairs of connected electronic thermostats (eTRV) and temperature sensors, wherein each pair of said components may be associated with one radiator 1.

The invention is not limited to the presently described embodiment. All features described in the claims, the description and shown in the figure may be regarded as relevant to the invention, alone and in combination with each other.

### Reference numbers

- 1: radiator
- 11: inlet conduit
- 12: outlet conduit
- eTRV: electronic thermostat
- IR: infrared temperature sensor

## Claims

1. Method for keeping fluid flow constant in a radiator (1), said radiator comprising an inlet (11) and an outlet conduit (12) for fluidly connecting the radiator (1) with a fluid source and an electronic thermostat (eTRV) for controlling the fluid flow in the radiator (1) wherein the method comprises
- measuring the temperature of the fluid at the inlet and/or at the outlet conduit and/or at the radiator at time intervals using a sensor;
- calculating the difference between the measured temperatures;
**characterized in that the method further comprises**
- verifying whether a daily schedule of the electronic thermostat (eTRV) has been changed and verifying whether the setpoint of the electronic thermostat (eTRV) has been changed by a user; and
- if the daily schedule of the electronic thermostat (eTRV) has not been changed, the setpoint of the electronic thermostat (eTRV) has not been changed and the difference between the measured temperatures exceeds a threshold, then varying the fluid flow in the radiator (1) by means of the electronic thermostat (eTRV) such that the temperature of the fluid approaches its temperature prior to the threshold exceedance, and,
if the daily schedule of the electronic thermostat (eTRV) has been changed or the setpoint of the electronic thermostat (eTRV) has been changed, then not counteracting this change and the corresponding change of flow through the radiator.

2. Method according to claim 1, **characterized in that** verifying whether the daily schedule of the electronic thermostat (eTRV) has been changed and verifying whether the setpoint of the electronic thermostat (eTRV) has been changed by a user is performed if the calculated difference between the measured temperatures exceeds a threshold.

3. Method according to any of the preceding claims, **characterized in that** measuring time intervals are constant and/or adjustable.

4. Method according to any of the preceding claims, **characterized in that** two consecutively measured temperatures or more than two measured temperatures are compared to each other.

5. Method according to any of the preceding claims, **characterized in that** the temperature is measured only at the outlet conduit or the inlet conduit.

6. Method according to any of the preceding claims, **characterized in that** the temperature is measured using an infrared temperature sensor (IR) attached to the outside of the inlet and/or outlet conduit and/or to the radiator.

7. Method according to any of the preceding claims, **characterized in that** the sensor is wirelessly connected to the electronic thermostat (eTRV).

8. System for keeping fluid flow constant in a radiator by means of a method according to any of claims 1 to 7, said system comprising an electronic thermostat (eTRV) and a temperature sensor (IR), wherein the electronic thermostat (eTRV) and the temperature sensor (IR) are wirelessly connected to each other.

## Patentansprüche

1. Verfahren zum Konstanthalten eines Fluidstroms in einem Heizkörper (1), wobei der Heizkörper eine Einlass- (11) und eine Auslassleitung (12) zum Verbinden des Heizkörpers (1) mit einer Fluidquelle und einen elektronischen Thermostat (eTRV) zum Steuern des Fluidstroms in dem Heizkörper (1) aufweist, wobei das Verfahren umfasst
- Messen der Temperatur des Fluids am Einlass und/oder an der Auslassleitung und/oder am Heizkörper in Zeitintervallen unter Verwendung eines Sensors;
- Berechnen der Differenz zwischen den gemessenen Temperaturen;
**dadurch gekennzeichnet, dass** das Verfahren weiter umfasst
- Überprüfen, ob ein Tagesplan des elektronischen Thermostats (eTRV) geändert wurde und überprüfen, ob der Sollwert des elektronischen Thermostats (eTRV) von einem Benutzer geändert wurde; und
- wenn der Tagesplan des elektronischen Thermostats (eTRV) nicht geändert wurde, der Sollwert des elektronischen Thermostats (eTRV) nicht geändert wurde und die Differenz zwischen den gemessenen Temperaturen einen Schwellenwert überschreitet, dann Variieren des Fluidstroms in dem Heizkörper mittels des elektronischen Thermostats (eTRV) derart, dass sich die Temperatur des Fluids seiner Temperatur vor der Schwellenwertüberschreitung nähert, und, wenn der Tagesplan des elektronischen Thermostats (eTRV) geändert wurde, der Sollwert des elektronischen Thermostats (eTRV) geändert wurde, dieser Änderung und der entsprechenden Änderung des Durchflusses durch den Heizkörper nicht entgegengewirkt wird.

2. Verfahren nach Anspruch 1, **dadurch gekennzeichnet, dass** die Überprüfung, ob der Tagesplan des elektronischen Thermostats (eTRV) geändert wurde, und die Überprüfung, ob der Sollwert des elektronischen Thermostats (eTRV) von einem Benutzer geändert wurde, durchgeführt wird, wenn die berechnete Differenz zwischen den gemessenen Temperaturen einen Schwellenwert überschreitet.

3. Verfahren nach einem der vorhergehenden Ansprüche, **dadurch gekennzeichnet, dass** die Messzeitintervalle konstant und/oder einstellbar sind.

4. Verfahren nach einem der vorhergehenden Ansprüche, **dadurch gekennzeichnet, dass** zwei aufeinanderfolgende gemessene Temperaturen oder mehr als zwei gemessene Temperaturen miteinander verglichen werden.

5. Verfahren nach einem der vorhergehenden Ansprüche, **dadurch gekennzeichnet, dass** die Temperatur nur an der Auslassleitung oder an der Einlassleitung gemessen wird.

6. Verfahren nach einem der vorhergehenden Ansprüche, **dadurch gekennzeichnet, dass** die Temperatur mit einem Infrarot-Temperatursensor (IR) gemessen wird, der an der Außenseite des Einlass- und/oder Auslasskanals und/oder am Heizkörper angebracht ist.

7. Verfahren nach einem der vorhergehenden Ansprüche, **dadurch gekennzeichnet, dass** der Sensor drahtlos mit dem elektronischen Thermostat (eTRV) verbunden ist.

8. System zum Konstanthalten eines Fluidstroms in einem Heizkörper mittels eines Verfahrens gemäß einem der Ansprüche 1 bis 7, wobei das System einen elektronischen Thermostat (eTRV) und einen Temperatursensor (IR) umfasst, wobei der elektronische Thermostat (eTRV) und der Temperatursensor (IR) drahtlos miteinander verbunden sind.

## Revendications

1. Procédé pour maintenir un débit de fluide constant dans un radiateur (1), ledit radiateur comprenant une entrée (11) et un conduit de sortie (12) pour connecter le radiateur (1) à une source de fluide et un thermostat électronique (eTRV) pour contrôler le débit de fluide dans le radiateur (1), dans lequel le procédé comprend
- mesurer la température du fluide à l'entrée et/ou au conduit de sortie et/ou au radiateur à des intervalles de temps à l'aide d'un capteur ;
- calculer la différence entre les températures mesurées ;
**caractérisé en ce que** le procédé comprend en outre
- vérifier si un programme journalier du thermostat électronique (eTRV) a été modifié et vérifier si le point de consigne du thermostat électronique (eTRV) a été modifié par un utilisateur ; et
- si le programme journalier du thermostat électronique (eTRV) n'a pas été modifié, si le point de consigne du thermostat électronique (eTRV) n'a pas été modifié et si la différence entre les températures mesurées dépasse un seuil, faire varier le débit du fluide dans le radiateur au moyen du thermostat électronique (eTRV) de manière à ce que la température du fluide s'approche de la température précédant le dépassement du seuil, et, si le programme journalier du thermostat électronique (eTRV) a été modifié, le point de consigne du thermostat électronique (eTRV) a été modifié, ne pas contrecarrer cette modification et la modification correspondante du débit dans le radiateur.

2. Procédé selon la revendication 1, **caractérisé en ce que** la vérification de la modification du programme journalier du thermostat électronique (eTRV) et la vérification de la modification du point de consigne du thermostat électronique (eTRV) par un utilisateur sont effectuées si la différence calculée entre les températures mesurées dépasse un seuil.

3. Procédé selon l'une des revendications précédentes, **caractérisé en ce que** les intervalles de temps de mesure sont constants et/ou réglables.

4. Procédé selon l'une quelconque des revendications précédentes, **caractérisé en ce que** deux températures mesurées consécutivement ou plus de deux températures mesurées sont comparées l'une à l'autre.

5. Procédé selon l'une quelconque des revendications précédentes, **caractérisé en ce que** la température est mesurée uniquement au niveau du conduit de sortie ou du conduit d'entrée.

6. Procédé selon l'une quelconque des revendications précédentes, **caractérisé en ce que** la température est mesurée à l'aide d'un capteur de température à infrarouge (IR) fixé à l'extérieur du conduit d'entrée et/ou de sortie et/ou au radiateur.

7. Procédé selon l'une quelconque des revendications précédentes, **caractérisé en ce que** le capteur est relié sans fil au thermostat électronique (eTRV).

8. Système pour maintenir un débit de fluide constant dans un radiateur au moyen d'un procédé selon l'une des revendications 1 à 7, ledit système comprenant un thermostat électronique (eTRV) et un capteur de température (IR), dans lequel le thermostat électronique (eTRV) et le capteur de température (IR) sont connectés sans fil l'un à l'autre.
